(19) Europäisches Patentamt
European Patent Office
Office européen des brevets

(11) **EP 0 841 507 A2**

(12) **EUROPÄISCHE PATENTANMELDUNG**

(43) Veröffentlichungstag:
13.05.1998 Patentblatt 1998/20

(51) Int. Cl.⁶: **F16J 9/06**

(21) Anmeldenummer: 97113211.3

(22) Anmeldetag: 31.07.1997

(84) Benannte Vertragsstaaten:
**AT BE CH DE DK ES FI FR GB GR IE IT LI LU MC NL PT SE**
Benannte Erstreckungsstaaten:
**AL LT LV RO SI**

(30) Priorität: 08.11.1996 DE 19646128

(71) Anmelder: **AE GOETZE GmbH D-51399 Burscheid (DE)**

(72) Erfinder: **Leutgäb, Hermann 86316 Friedberg (DE)**

(54) **Schraubendruckfedern für Ölabstreifkolbenringe**

(57) Die Erfindung betrifft Schraubendruckfedern (5) für Ölabstreifkolbenringe (1). Die Schraubendruckfedern (5) weisen eine konstante Steigung (s) auf und sind nach einem definierten Wickelverhältnis gefertigt, so daß die sich gegenseitig abstützenden Enden der Schraubendruckfedern (5) eine Stützfläche (A) aufweisen, die mindestens 50 % der Querschnittsfläche der Windungen (6) entspricht.

FIG. 1

EP 0 841 507 A2

**Beschreibung**

Die Erfindung betrifft Schraubendruckfedern für Ölabstreifkolbenringe von Brennkraftmaschinen, deren Enden im Einbauzustand sich gegenseitig in Umfangsrichtung abstützen und die Länge der ungespannten Schraubendruckfedern in Abhängigkeit der einzelnen oder serienweise unterschiedlichen Tangentialkraft unterschiedlich ist, so daß sich bei gleicher Länge der gespannten Federn im Einbauzustand gleiche Federkräfte ergeben.

Für die Ölverbrauchsregulierung einer Brennkraftmaschine, spielen die Ölabstreifkolbenringe eine bedeutende Rolle. Es sind eine Vielzahl von verschiedenen Konstruktionen mit entsprechend unterschiedlichen Funktionseigenschaften aus dem Stand der Technik zu entnehmen. Neben der Profilausbildung der Ölabstreifkante sind als wesentliche Merkmale die spezifische Pressung und das Formfüllvermögen des Ringes zu nennen, die Einfluß auf den Ölverbrauch des Motors nehmen. Die Flächenpressung zwischen Abstreifkante und Zylinderwand resultiert aus der Gesamt-Tangentialkraft des Ringsystems. Das Formfüllvermögen oder Flexibilität des Kolbenringes an die durch Verzüge von der idealen Kreisform abweichenden Zylinderwand wird ebenfalls von der Tangentialkraft des Ringsystems beeinflußt. Die größte Bandbreite hinsichtlich der Einstellung aufbestimmte Tangentialkräfte ergibt sich bei Verwendung von Schraubendruckfedern am Innenumfang der Ölabstreitkolbenringe. Da die Gesamttangentialkraft sich aus der Tangentialkraft des Kolbenringes selbst und der Schraubendruckfeder zusammensetzt, ergeben sich in der Praxis Probleme in der Einhaltung bestimmter eng tolerierter Toleranzfelder. Besonders bei der Massenherstellung kann sich die Ferderkonstante der Schraubenfedern innerhalb einer Serie ändern, da diese vom Werkstoff, vom Durchmesser des Federdrahtes und vom Wickeldurchmesser abhängig ist. Diese fertigungstechnisch bedingten Einzel-Toleranzen können sich beim Zusammenbau des Kolbenringes addieren.

Um die inerhalb einer Serie verbleibenden unterschiedlichen Tangentialkräfte in engeren Grenzen zu halten, wurde bereits gemäß DE PS 1 213 183 vorgeschlagen, nicht einheitlich gleichlange Schraubendnickfedern zu verwenden, sondern die Länge der Federn variabel zu gestalten, d.h.: bei vorgegebener Tangentialkraft kann die im Kolbenring einzubauende Schraubendruckfeder im ungespannten Zustand länger oder kürzer ausgebildet sein, je nach Größe der aus dem Material und Wikkeldurchmesser sich ergebenden Federkonstanten. Auf diese Weise wurden alle aus E-Modul des Werkstoffes, aus Drahtdurchmesser und Wickeldurchmesser resultierenden Streuungen eliminiert.

Problematisch beim Ablängen der Schraubenfedern auf unterschiedliche Längen erweist sich jedoch der Endbereich an dem der Trennschnitt durchgeführt wird. Je nach dem, an welcher Stelle die Feder abgetrennt wird, ergibt sich eine mehr oder weniger große Stützfläche an den in Umfangsrichtung sich abstützenden Federenden. Bei einer Stützfläche, die kleiner als der halbe Windungsquerschnitt ist, können die Federenden sich ein- oder verhaken. Um dies zu vermeiden, wurden bisher die Ferderenden enger gewickelt als im übrigen Bereich. Dieser zusätzliche Arbeitsgang führte einerseits zu höheren Kosten und andererseits wieder zu Streuungen im Hinblick auf die Federkonstante.

Der Erfindung liegt die Aufgabe zugrunde, das Toleranzfeld im Hinblick auf die Gesamttangentialkraft bei gattungsgemäßen Ölabstreifkolbenringen in engeren Grenzen als bisher zu halten, wobei gleichzeitig eine kostengünstigere Herstellbarkeit angestrebt wird.

Diese Aufgabe wird erfindungsgemäß durch die kennzeichnenden Merkmale des Patentanspruchs 1 gelöst. Eine vorteilhafte Ausgestaltung der Erfindung ist im Unteranspruch dokumentiert.

Aufgrund des besonderen Wickelverhältnisses in Verbindung mit der konstanten Steigung kann an jeder beliebigen Stelle der Schraubenfeder ein Trennschnitt durchgeführt werden. Dieser führt immer zu einer Stützfläche von mindestens 50 % der Querschnittsfläche der Windungen. Da die Endbereiche nicht enger gewickelt werden müssen, können die Schraubenfedern als endloses Magazin hergestellt und entsprechend der benötigten Längen von diesen abgetrennt werden. Durch die Verwendung von ovalen oder elliptischen Profilen kann der Schraubenfederdurchmesser klein gewählt werden, so daß die Anwendung bei axial niedrigen Ölabstreitkolbenringen sichergestellt ist. Insgesamt ergibt sich eine kostengünstigere, automatisierte Herstellungsmöglichkeit von Schraubendruckfedern mit eingeschränkter Federkonstantenstreuung.

Die Erfindung ist in der Zeichnung dargestellt und wird im folgenden näher erläutert:

Es zeigen:

Figur 1    einen Querschnitt durch einen Ölabstreifkolbenring.

Figur 2    einen Teilquerschnitt einer erfindungsgemäßen Schraubendruckfeder.

Figur 3    Ansicht auf den Trennschnitt am Federende.

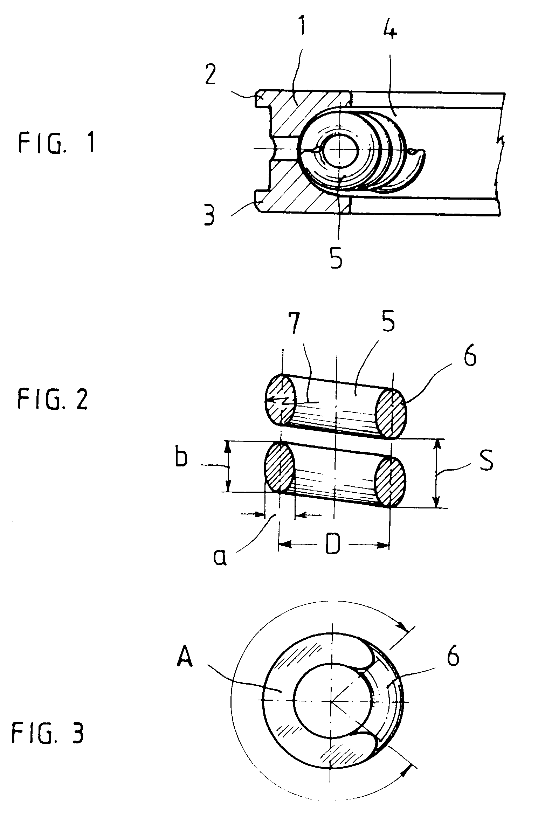

Der in Figur 1 dargestellt Ölabstreifkolbenring besteht aus einem Ölabstreifkolbenring (1) aus Gußeisen mit radial außenliegenden Laufstegen (2, 3). In einer Ringnut (4) am Innenumfang des Ölabstreikolbenringes ist eine erfindungsgemäße Schraubendruckfeder (5), die als Spreizfeder fungiert, dargestellt.

Die in der Figur 2 dargestellte Schraubendruckfeder (5) weist über die gesamte Umfangslänge die gleiche Steigung (s) auf. Das Profil der Windungen (6) ist elliptisch oder oval ausgebildet. Die axiale Höhe (b) ist wesentlich größer als die radiale Breite (a) der Windungen (6). Durch die elliptische oder ovale Profilierung ergibt sich am Aussenumfang ein Radius (7), welcher eine gute Anpassung an die Ringnut (4) ermöglicht. Durch das nach der Formel A [%] = $^b/_S$ x 100 definierte Wickelverhältnis ergibt sich am Endbereich der Schraubendruckfeder eine Stützfläche A, die mindestens 50 % der Querschnittsfläche der Windungen (6) entspricht (Figur 3). Zur Anpassung an unterschiedlich breite Ringnuten (4) kann durch Variation des Maßes (a) die Biegespannung der Schraubendruckfeder (5) und damit der Durchmesser D beeinflußt werden.

**Patentansprüche**

1. Schraubendruckfedern für Ölabstreifkolbenringe von Brennkraftmaschinen, deren Enden im Einbauzustand sich gegenseitig in Umfangsrichtung abstützen und die Länge der ungespannten Schraubendruckfedern in Abhängigkeit der einzelnen oder serienweise unterschiedlichen Tangentialkraft unterschiedlich ist, so daß sich bei gleicher Länge der gespannten Federn im Einbauzustand gleiche Ferderkräfte ergeben, dadurch gekennzeichnet, daß die Windungen (6) der Schraubendruckfedern (5) über die gesamte Länge mit konstanter Steigung (s) verlaufen und daß das Verhältnis von axialer Höhe (b) der Windungen (6) zur Steiung (s) nach der Formel A [%] = $^b/_S$ x 100 gebildet ist, so daß an den Enden eine Stützfläche (A) von mindestens 50 % der Querschnitssfläche der Windungen (6) erzeugt ist.

2. Schraubendruckfedern nach Anspruch 1, dadurch gekennzeichnet, daß die Schraubendruckfeder (5) aus einem Draht mit ovalem Profilquerschnitt gewickelt ist.

FIG. 1

FIG. 2

FIG. 3